(19) Europäisches Patentamt / European Patent Office / Office européen des brevets

(11) EP 3 259 736 B1

(12) EUROPÄISCHE PATENTSCHRIFT

(45) Veröffentlichungstag und Bekanntmachung des Hinweises auf die Patenterteilung:
26.08.2020 Patentblatt 2020/35

(21) Anmeldenummer: 16706157.1

(22) Anmeldetag: 16.02.2016

(51) Int Cl.:
G06T 7/11 *(2017.01)*     G06T 7/60 *(2017.01)*

(86) Internationale Anmeldenummer:
PCT/EP2016/053213

(87) Internationale Veröffentlichungsnummer:
WO 2016/131795 (25.08.2016 Gazette 2016/34)

(54) **VORRICHTUNG UND VERFAHREN ZUM KAMERABASIERTEN BERECHNEN EINES LÄNGENVERHÄLTNISSES VON FINGERN EINER HAND**

DEVICE AND METHOD FOR CAMERA-BASED CALCULATION OF A LENGTH RATIO OF THE FINGERS OF A HAND

DISPOSITIF ET PROCÉDÉ DE CALCUL, BASÉS SUR UNE CAMÉRA, D'UN RAPPORT DE LONGUEURS DES DOIGTS D'UNE MAIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.02.2015 DE 102015202922**

(43) Veröffentlichungstag der Anmeldung:
**27.12.2017 Patentblatt 2017/52**

(73) Patentinhaber: **Fraunhofer-Gesellschaft zur Förderung der angewandten Forschung e.V.
80686 München (DE)**

(72) Erfinder:
• **TANTINGER, Daniel
91056 Erlangen (DE)**
• **KOCH, Robert
91052 Erlangen (DE)**
• **STRUCK, Matthias
90766 Fürth (DE)**
• **HASSLMEYER, Erik
90408 Nürnberg (DE)**

• **RULSCH, Martin
91054 Erlangen (DE)**

(74) Vertreter: **Schenk, Markus et al
Schoppe, Zimmermann, Stöckeler
Zinkler, Schenk & Partner mbB
Patentanwälte
Radlkoferstrasse 2
81373 München (DE)**

(56) Entgegenhaltungen:
EP-A2- 2 797 030     WO-A1-2015/017099
CN-A- 101 470 800     US-A1- 2011 268 365
US-A1- 2012 068 917

• JONGSHILL LEE ET AL: "Hand region extraction and gesture recognition from video stream with complex background through entropy analysis", PROCEEDINGS OF THE 26TH ANNUAL INTERNATIONAL CONFERENCE OF THE IEEE EMBS SAN FRANCISCO,CA, IEEE SERVICE CENTER, PISCATAWAY, NJ, Bd. 3, 1. September 2004 (2004-09-01), XP010775235, ISBN: 978-0-7803-8439-2

EP 3 259 736 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Vorrichtung und ein Verfahren zum kamerabasierten Berechnen eines Längenverhältnisses von Fingern einer Hand. Ausführungsbeispiele zeigen eine Methode zur vollautomatischen Bestimmung eines 2D:4D-Fingerlängenverhältnisses auf Basis von Bilddaten. Das 2D:4D Fingerlängenverhältnis ist das Verhältnis von Zeigefinger zu Ringfinger einer Hand.

Anfang des 20. Jahrhunderts konnte im Hinblick auf Zeige- und Ringfingerlänge ein sexueller Dimorphismus beobachtet werden, bei dem der Zeigefinger bei Frauen in der Regel genauso lang oder länger ist als der Ringfinger. Bei Männern ist der Zeigefinger in der Regel kürzer als der Ringfinger. In der 80iger Jahren gab es erste Studien, die eine Korrelation zwischen dem Längenverhältnis zwischen Zeige- und Ringfinger (auch 2D:4D-Ratio genannt) und der Konzentration an Androgenen, der man in einem gewissen Zeitraum während der pränatalen Phase ausgesetzt war, aufzeigen. So sind beispielsweise kleinere 2D:4D-Fingerlängenverhältnisse ein Indikator für ein erhöhtes Suchtpotential (Alkoholismus, Videospiele, etc.). Manuelles Vermessen der Fingerlängen ist bis dato die etablierte Vorgehensweise. Dabei wird mit einem Flachbettscanner ein Abbild der Handinnenflächen erstellt. Dieses kann entweder mit einer Linealfunktion von Bildverarbeitungsprogrammen oder mit Hilfe eines Lineals am Ausdruck selbst vermessen werden. Um die Zuverlässigkeit der Ergebnisse zu erhöhen, werden oftmals mehrerer Messungen an der gleichen Testperson durchgeführt. Die Vielzahl an Messungen ist mit einem erhöhten Zeitaufwand verbunden.

Teilweise wurden die Fingerlängen mit einem Vernier-Messschieber mit Ablesegenauigkeit von 0,01 mm bis 0,05 mm direkt an der Hand gemessen [1], [2], [3]. Überwiegend kamen jedoch Photokopierer oder Flachbettscanner mit hohen Auflösungen zum Einsatz, auf die der Nutzer seine Hand legen sollte. Die Messungen wurden dann wiederum mit Vernier-Messschiebern [2], [4], durchsichtigen Linealen [5], [6] oder, sofern die Kopien in digitaler Form vorlagen, mit Software-Werkzeugen [7], [8] vorgenommen. Für die Messung der Fingerlängen selbst wurden fast durchgängig die Fingerspitze und die Mitte der untersten Falte am Übergang vom Finger zur Handinnenfläche als Referenzpunkte herangezogen. Letzteres konnte für genauere Messungen im Vorfeld noch zusätzlich markiert werden [7], [8]. Die oben genannten Verfahren sind sehr umständlich und zeitintensiv, da eine Messung mehrmals an einer Versuchsperson vorgenommen werden muss, um einen gewissen Grad an Zuverlässigkeit zu erreichen. Dies geschieht entweder durch mehrere unabhängige Beobachter oder über einen gewissen Zeitraum hinweg von einem einzelnen. Hinzu kommt, dass mit dem bisherigen Verfahren ein direkter Kontakt der Hände der Versuchsperson mit Teilen der jeweiligen Versuchsaufbauten notwendig ist, was für einige Personen ein hygienisches Problem darstellen kann.

Die WO 2015/017099 A1 beschreibt eine Vorrichtung zum kamerabasierten Berechnen eines Längenverhältnisses von Fingern einer Hand, umfassend eine Bildaufnahmeeinheit, die im Bereich des sichtbaren Lichtes an drei verschiedenen Wellenlängen ein erstes Bild der Hand sowie im Bereich des Nahen Infrarot ein zweites Bild der Hand aufnimmt, wobei eine Bildanalyseeinheit vorgesehen ist, anhand des im Bereich des sichtbaren Lichtes aufgenommenen ersten Bildes die Hand gegenüber dem Bildhintergrund zu segmentieren. In einem weiteren Verfahrensschritt werden die Verhältnisse der Längen zweier Finger bestimmt werden; hierzu wird die Kontur der gesamten aufgenommenen Hand durch Hüllen angenähert, um die Fingerspitzen sowie Fingerzwischenräume zu erfassen. Hierbei wird jeweils die gesamte bildlich aufgenommene Hand, also die Handfläche samt den fünf Fingern, ausgewertet.

Die US 2011/0268365 A1 beschreibt ein Verfahren zum Erfassen einer Handgeste, bei dem die Kontur der Hand aus einem Bild ermittelt wird. In einem weiteren Verfahrensschritt wird ausgehend von einem Referenzpunkt rechnerisch eine Wellenform ermittelt, anhand derer sich erfassen lässt, ob die Hand zur Faust geballt ist, oder ob ein oder mehrere Finger von der Handfläche ausgestreckt sind. Die Auswertung betrifft die Auswertung der gesamten bildlich aufgenommenen Hand, wobei nur ein Hinweis dazu gegeben wird, wie allenfalls qualitativ ermittelt werden kann, ob ein Finger einer Hand ausgestreckt ist.

Die US 2012/0068917 A1 beschreibt ebenfalls eine Vorrichtung bzw. ein Verfahren zum Erfassen einer Handgeste, bei dem anhand eines segmentierten Binärbildes anhand eines Referenzbildes ermittelt wird, welcher der Finger der Hand ausgestreckt ist. Der Auswertung liegt hier ebenfalls das Bild der gesamten Hand zugrunde.

Die EP 2 2797 030 A2 beschreibt ein Verfahren sowie eine Vorrichtung zur biometrischen Erkennung, dem, ausgehend von ausgehend von einem zuvor segmentierten Graustufenbild sowie einem weiteren zuvor segmentierten Farbbild einer Hand ein zusammengesetztes Handbild zugrundegelegt wird. Diesem rechnerisch zusammengesetzten Bild wird insbesondere eine Breite eines Fingers nahe der Fingerspitze entnommen. Der Fingerzwischenraum wird zu der Handfläche gerechnet und nicht zu dem rechnerisch abgetrennten Finger. Eine Länge eines Mittelfingers wird allenfalls so weit bestimmt, dass Bilder skaliert werden können.

Der vorliegenden Erfindung liegt somit die Aufgabe zugrunde, ein verbessertes Konzept zur Bestimmung von Fingerlängenverhältnissen zu schaffen.

Diese Aufgabe wird durch den Gegenstand der unabhängigen Patentansprüche gelöst. Erfindungsgemäße Weiterbildungen sind in den Unteransprüchen definiert.

Ausführungsbeispiele zeigen eine Vorrichtung zum kamerabasierten Berechnen eines Längenverhältnisses von Fingern einer Hand mit einer Bildaufnahmeeinheit, einer Bildanalyseeinheit und einer Bildauswerteeinheit. Die Bildaufnahmeeinheit ist ausgebildet, ein Standbild von der Hand zu erzeugen, wohingegen die Bildanalyseeinheit ausgebildet ist, die Finger der Hand gemäß dem Standbild mittels Segmentierung zu detektieren, um ein Binärbild zu erhalten, wobei das Binärbild einen ersten Teilbereich, der die Hand umfasst, sowie einen zweiten Teilbereich aufweist. Dem ersten Teilbereich wird in dem Binärbild eine erste Farbe und dem zweiten Teilbereich eine zweite Farbe zugeordnet. Die Bildauswerteeinheit bestimmt eine Länge von ausgewählten Fingern anhand des Binärbilds und berechnet ein Verhältnis zwischen den Längen der ausgewählten Finger.

Der Erfindung liegt die Erkenntnis zugrunde, dass das Bestimmen des Längenverhältnisses zwischen zumindest zwei Fingern, z.B. dem Zeige- und dem Ringfinger, wie es beispielsweise in der Psychologie relevant ist, rechnerbasiert analysiert werden kann. Hierfür wird mit einer Kamera, beispielsweise von einem Smartphone, ein Bild von der Hand gemacht. Mittels eines geeigneten Segmentierungsverfahrens kann die Hand vom Hintergrund separiert und computerbasiert vermessen werden. Durch die Vermessung werden, beispielsweise pixelbasiert, die Längen von ausgewählten Fingern ermittelt und eine Relation zwischen den beiden gebildet. Somit kann das Fingerlängenverhältnis kontaktlos und mittels einer einzigen Messung verlässlich und standardisiert ermittelt werden.

Ausführungsbeispiele zeigen die Bildanalyseeinheit, die eine Position der Finger und eine Position an einem Umfang des ersten Teilbereichs zwischen den Fingern in dem Binärbild bestimmt. Ausgehend von einem Fixpunkt im ersten Teilbereich wird dabei zirkular eine Entfernung von dem Fixpunkt zu einem nächstgelegenen Punkt im zweiten Teilbereich unter sich unterscheidenden Winkeln ermittelt. Lokale Maxima in einem Verlauf der Entfernung über die Winkel bestimmen die Position der Finger und lokale Minima zwischen den Spitzen bestimmen die Positionen an dem Umfang des ersten Teilbereichs zwischen den Fingern. Dies ist vorteilhaft, da die Position sowie die Begrenzung der Finger eine Separierung der Finger von der Hand ermöglichen. Das Separieren des Fingers kann beispielsweise mittels einer Definition eines Bereichs von Interesse (engl.: Region of Interest, ROI) erreicht werden. Der Fixpunkt kann vorteilhaft der Schwerpunkt des ersten Teilbereichs sein.

Ausführungsbeispiel zeigen ferner die Bildauswerteeinheit, die einen Ausschnitt aus dem Standbild oder dem Binärbild auswählt. Der Ausschnitt ist durch eine Fingerkuppe eines ausgewählten Fingers, eine erste und eine zweite Position an einem Umfang des ersten Teilbereichs zwischen den an dem ausgewählten Finger angrenzenden Fingern, sowie einer Position des Fingers bestimmt. Der so erhaltene Ausschnitt isoliert den ausgewählten Finger aus dem Standbild oder dem Binärbild. Dies ist vorteilhaft, da der ausgewählte Finger somit eindeutig definiert ist und beispielsweise die Messung der Länge des ausgewählten Fingers nicht durch andere Finger im Bereich von Interesse beeinflusst wird.

Ausführungsbeispiele zeigen die Bildauswerteeinheit, die anhand einer zweiten Position und einem Umfang des ersten Teilbereichs, sowie einer Position des ausgewählten Fingers eine Neigung des ausgewählten Fingers bestimmt. Dies ist vorteilhaft, da sich die Messung der Länge des ausgewählten Fingers dann als Differenz der y-Werte zwischen der Fingerkuppe und einem zu definierenden Endpunkt des ausgewählten Fingers bestimmt.

Gemäß weiteren Ausführungsbeispielen ist die Bildauswerteeinheit ausgebildet, die Länge eines ausgewählten Fingers als Distanz zwischen einer Fingerkuppe des ausgewählten Fingers und einem Mittelpunkt einer Verbindung zwischen einer ersten Position und einem Umfang des ersten Teilbereichs zwischen den Fingern, die an den ausgewählten Finger angrenzt, und einer zweiten Position an dem Umfang des ersten Teilbereichs, die an dem ausgewählten Finger angrenzt, zu bestimmen. Ergänzend oder alternativ kann die Bildauswerteeinheit ausgebildet sein, die Länge des ausgewählten Fingers gemäß einer Längsausrichtung des ausgewählten Fingers, als eine Länge einer lotrechten Verbindung zwischen der Fingerkuppe und einer senkrecht zu der lotrechten Verbindung angeordneten Linie durch eine Position an einem Umfang des ersten Teilbereichs zwischen den Fingern zu bestimmen. Dies ist vorteilhaft, da zwei Verfahren zur Längenbestimmung des ausgewählten Fingers vorliegen, die gemäß der Anatomie der Hand angewendet werden. So ist beispielsweise beim Ringfinger die Anwendung des Mittelpunkts der Verbindung zwischen der ersten und der zweiten Position des Umfangs des ersten Teilbereichs vorteilhaft, wobei beim Zeigefinger das alternative Verfahren angewendet werden kann.

Gemäß einem alternativen Ausführungsbeispiel ist die Bildauswerteeinheit ausgebildet, einen Ausschnitt des Standbilds oder des Binärbilds, der den ausgewählten Finger aufweist, in Dickenrichtungen und Abschnitte zu unterteilen, wobei ein erster Abschnitt, der ausschließlich Bildpunkte eines zweiten Teilbereichs aufweist, eine Fingerkuppe des ausgewählten Fingers definiert. Dies ist vorteilhaft, da eine sehr exakte Bestimmung der Fingerkuppe mit geringem Rechenaufwand erreicht wird, wenn beispielsweise ein Ausschnitt eine Bildzeile umfasst, die lateral durch den ausgewählten Finger verläuft, gewählt wird.

Ausführungsbeispiele zeigen die Bildauswerteeinheit, die ausgebildet ist, aus dem Standbild ein Graustufenbild zu erzeugen. Ferner kann die Bildauswerteeinheit an einem ausgewählten Finger ein Helligkeitsprofil, beispielsweise basierend auf dem Graustufenbild, berechnen. Zur Berechnung des Helligkeitsprofils kann die Bildauswerteeinheit ausgebildet sein, den Finger in Dickenrichtung in Abschnitte zu unterteilen und das Helligkeitsprofil aus einem Mittelwert oder einer Summe der Abschnitte zu berechnen. Die Bildanalyseeinheit ist nun ausgebildet, Falten im Bereich von Gelenken an einem ausgewählten Finger anhand von lokalen Ausschlägen in dem Helligkeitsprofil zu bestimmen, und anhand der Position der Falten die Länge des ausgewählten Fingers zu bestimmen.

Gemäß einem weiteren Ausführungsbeispiel ist die Bildanalyseeinheit ausgebildet, das Standbild mittels eines Farbstrukturcodes (Color Structure Code) zu segmentieren.

Bevorzugte Ausführungsbeispiele der vorliegenden Anmeldung werden nachfolgend Bezug nehmend auf die beiliegenden Zeichnungen näher erläutert. Es zeigen:

Fig. 1    eine schematische Blockdarstellung einer Vorrichtung zum kamerabasierten Berechnen eines Längenverhältnisses von ausgewählten Fingern einer Hand;

Fig. 2a-c    eine schematische Übersichtsdarstellung von Bildverarbeitungsschritten der Vorrichtung aus Fig. 1;

Fig. 3    eine schematische Darstellung der Bildverarbeitungsschritte eines beispielhaften Segmentierungsalgorithmus;

Fig. 4    eine schematische Darstellung eines Flussdiagramms für ein Verfahren zur kamerabasierten Berechnung eines Längenverhältnisses von ausgewählten Fingern.

In der nachfolgenden Beschreibung der Figuren werden gleiche oder gleichwirkende Elemente mit den gleichen Bezugszeichen versehen, so dass deren Beschreibung in den unterschiedlichen Ausführungsbeispielen untereinander austauschbar ist.

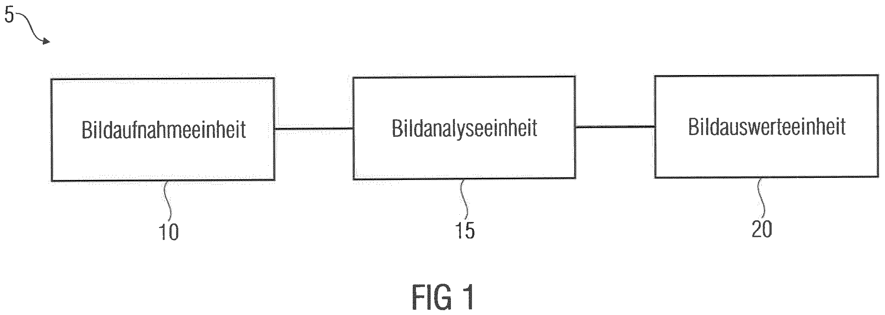

Fig. 1 zeigt eine schematische Blockdarstellung einer Vorrichtung 5 zum kamerabasierten Berechnen eines Längenverhältnisses von Fingern einer Hand. Die Vorrichtung 5 umfasst eine Bildaufnahmeeinheit 10, eine Bildanalyseeinheit 15, sowie eine Bildauswerteeinheit 20. Die Bildaufnahmeeinheit ist ausgebildet, ein Standbild von der Hand zu erzeugen. Die Bildanalyseeinheit detektiert die Finger der Hand gemäß dem Standbild mittels Segmentierung, um ein Binärbild zu erhalten, wobei das Binärbild einen ersten Teilbereich, der die Hand umfasst, sowie einen zweiten Teilbereich aufweist, wobei dem ersten Teilbereich eine erste Farbe und dem zweiten Teilbereich eine zweite Farbe zugeordnet ist. Die Bildauswerteeinheit 20 ist ausgebildet, eine Länge von ausgewählten Fingern anhand des Binärbilds zu bestimmen und ein Verhältnis zwischen den Längen der ausgewählten Finger zu berechnen.

Die Bildaufnahmeeinheit 10 kann eine handelsübliche Kamera sein, wie sie beispielsweise in aktuellen Smartphones (dt.: Mobiltelefon) verbaut ist. Die Bildanalyseeinheit 15 und die Bildauswerteeinheit 20 können computerimplementiert sein, wobei die Bilder der Bildaufnahmeeinheit 10 von einem Rechnersystem wie z.B. einem handelsüblichen Computer, einer Recheneinheit eines Smartphones, oder unter Verwendung von Hardware, die für die Lösung des Problems optimiert ist, wie beispielsweise ein Graphikprozessor (GPU) oder eine anwendungsspezifische integrierte Schaltung (ASIC) ausgewertet werden, um die Fingerlängen zu bestimmen. Da die Aufnahmen vor einem beliebigen Hintergrund erzeugt werden sollen, ist es vorteilhaft, dass die Hand mit der Bildanalyseeinheit 15 möglichst perfekt segmentiert wird, um genaue und vergleichbare Messungen zu erzielen. Da die Vorgehensweise bei jeder Testperson immer nach dem gleichen Schema abläuft, ist eine einmalige Vermessung der Hand ausreichend. Vergleichsmessungen wie sie bei der manuellen Messung nötig sind, werden so vermieden.

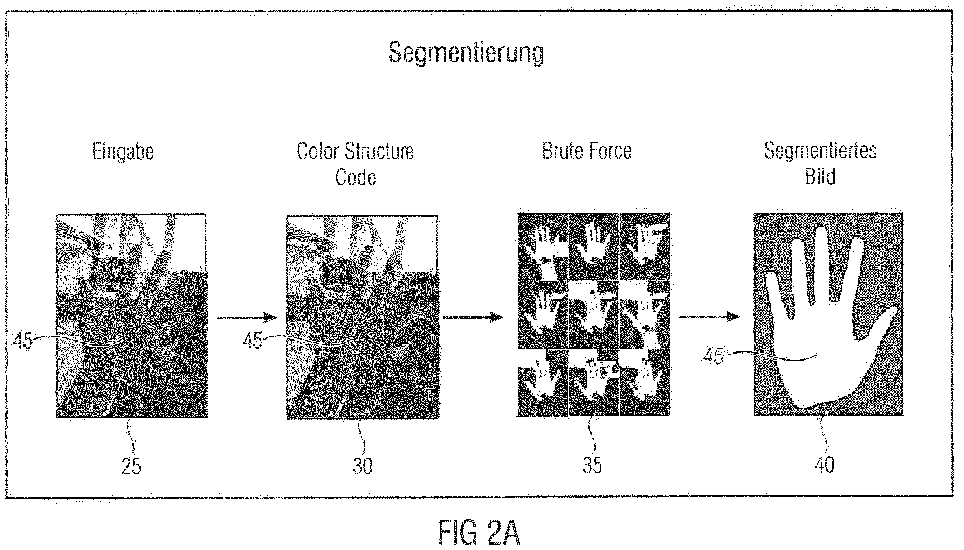

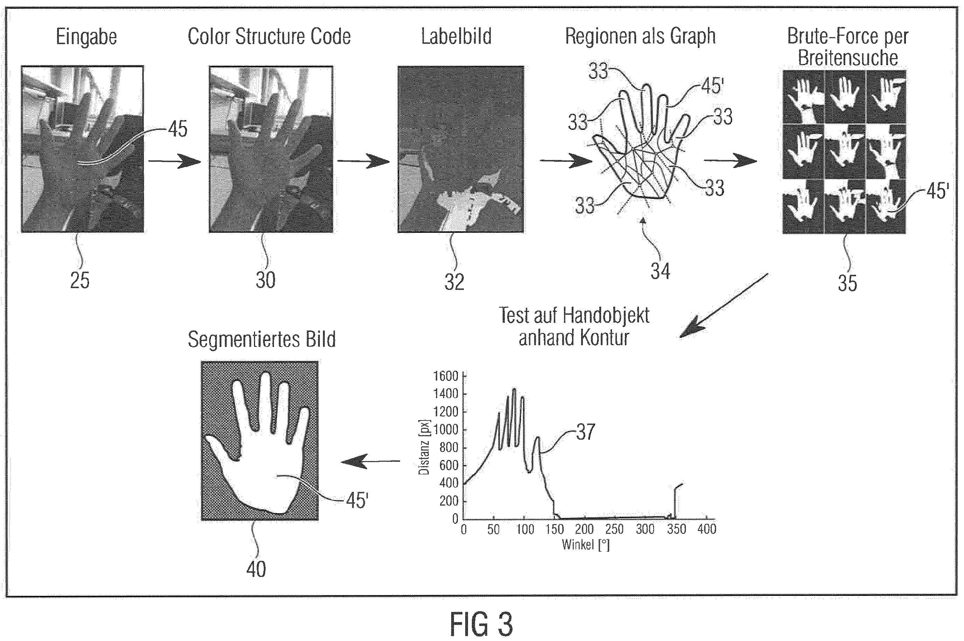

Fig. 2a zeigt eine schematische Darstellung der Bildverarbeitungsschritte für die Segmentierung. In der hier dargestellten Kurzform umfasst die Segmentierung vier Bildverarbeitungsschritte, die in den Bildern 25, 30, 35, 40 münden. In Fig. 3 wird die Segmentierung nochmals detailliert beschrieben. Auf Bild 25 ist die schematische Darstellung einer Eingabe, beispielsweise ein Foto einer Kamera von einer Hand gezeigt. Das Foto wird mit der Bildaufnahmeeinheit 10 erzeugt. Ferner können auf das Foto beliebige Bildverarbeitungsalgorithmen angewendet werden, die die Hand 45 vom Rest des Bilds segmentieren. Das hier gezeigte Ausführungsbeispiel erläutert das Vorgehen anhand des Color Structure Codes als Segmentierungsverfahren. Bild 30 zeigt die Aufnahme 25 nach der Anwendung des Color Structure Code, Bereiche des Bildes 25, die eine ähnliche Farbe aufweisen, erkennen und zusammenfassen. Ausgehend von einem geeigneten Startbereich werden im Bild 35 angrenzende Bereiche beispielsweise mittels Brute Force Methode (Methode der rohen Gewalt) ausgewählt und auf eine Zugehörigkeit zur Hand 45 getestet. Daraus ergibt sich in Bild 40 ein segmentiertes Bild, das als Binärbild 40 dargestellt werden kann, wobei die Hand 45 beispielsweise die Farbe Weiß und der Rest des Bilds die Farbe Schwarz aufweisen kann. Die Farbauswahl ist nicht einschränkend und kann ferner beliebige Farbkombinationen aus zwei sich unterscheidenden Farben aufweisen.

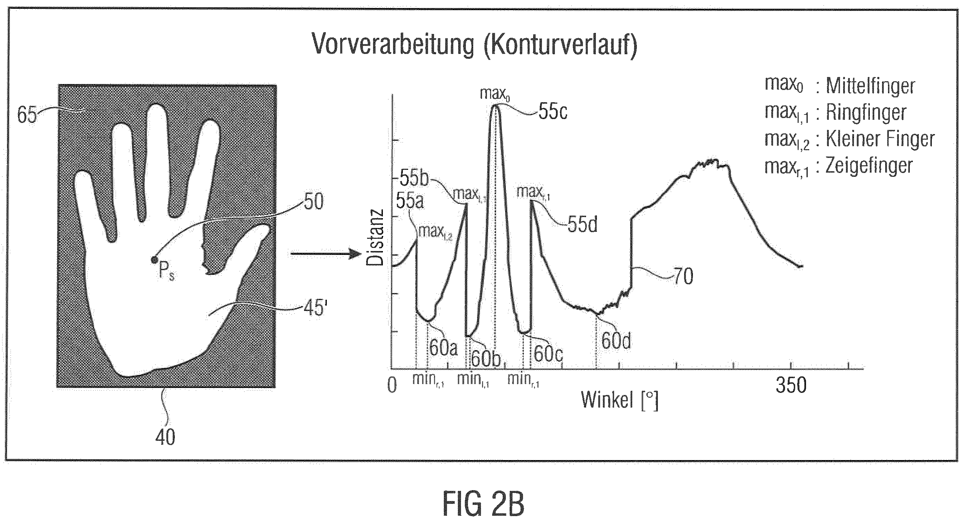

Fig. 2b zeigt das in Fig. 2a erhaltene Binärbild 40, das in dem ersten Teilbereich die Hand 45 aufweist und in dem zweiten Teilbereich den die Hand umgebenden Bereich, beispielsweise den Hintergrund des Bilds 25, aufweist. Ferner ist in dem Binärbild ein Fixpunkt 50 gezeigt, der beispielsweise einen Schwerpunkt des ersten Teilbereichs des Binärbilds ist. Die Bildanalyseeinheit ist nun ausgebildet, eine Position der Finger 55a-d und eine Position an einem Umfang des ersten Teilbereichs 45' zwischen den Fingern 60a-d in dem Binärbild 40 zu bestimmen, wobei die Bildanalyseeinheit ausgebildet ist, ausgehend von dem Fixpunkt 50 im ersten Teilbereich 45' zirkular eine Entfernung von dem Fixpunkt 50 zu einem nächstgelegenen Punkt im zweiten Teilbereich 65 unter sich unterscheidenden Winkeln zu ermitteln. In anderen Worten werden, ausgehend vom Fixpunkt 50, beispielsweise in Schritten von 1 Grad, Halbgeraden in den Fixpunkt 50 gelegt, wobei der nächstgelegene Punkt auf der Halbgeraden, der außerhalb des ersten Teilbereichs 45' liegt, die Entfernung unter dem aktuellen Winkel ist. Lokale Maxima in einem Verlauf der Entfernung über die Winkel bestimmen die Position der Finger 55a-d und lokale Minima zwischen den Maxima die Position an dem Umfang des ersten Teilbereichs zwischen den Fingern 60a-d. Somit kann der rechts in Fig. 2b dargestellte Konturverlauf 70 als Entfernung des zweiten Teilbereichs vom Fixpunkt 50 über den zugehörigen Winkel bestimmt werden.

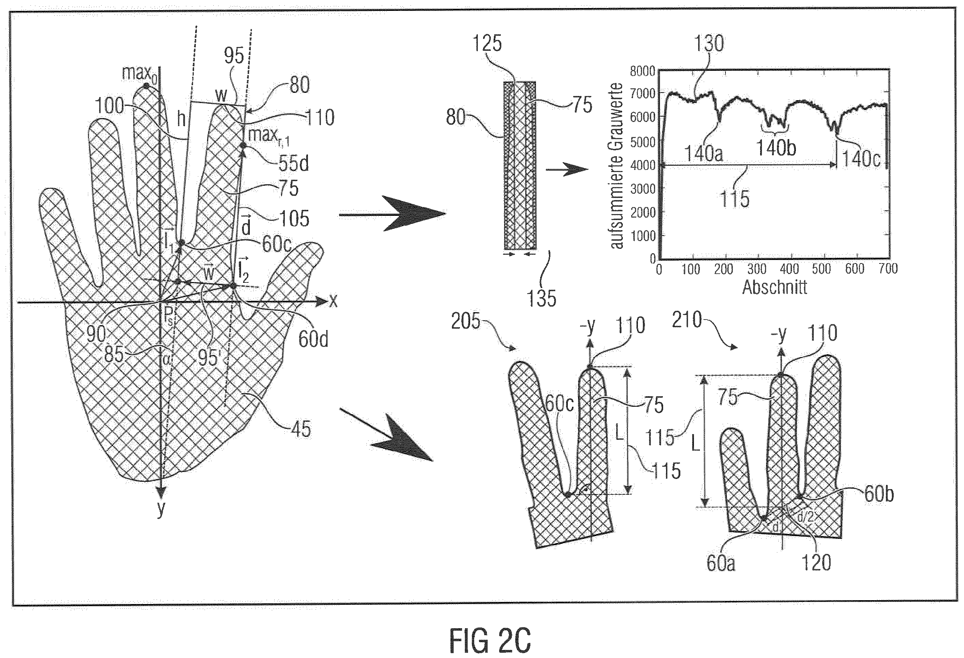

Fig. 2c zeigt im linken Bereich die Hand bzw. den ersten Teilbereich 45', für den beispielhaft der Zeigefinger 75 als ROI 80 ausgewählt ist. Die ROI (Region of Interest, dt.: Bereich von Interesse) kann durch nachfolgende Berechnung gemäß einem Ausführungsbeispiel bestimmt werden. Eine Neigung $\alpha$ 85 des ausgewählten Fingers 75 wird basierend auf dem Vektor d 105, der von der zweiten Position am Umfang des ersten Teilbereichs zwischen den Fingern 60d zur Position des ausgewählten Fingers 55d zeigt, wie folgt berechnet:

$$\alpha = \arccos\left(\frac{\left|\vec{d} \bullet (-\vec{e}_y)\right|}{\left|\vec{d}\right|}\right)$$

Somit ist die Bildauswerteeinheit 20 ausgebildet, anhand einer zweiten Position an einem Umfang des ersten Teilbereichs 60d sowie einer Position des ausgewählten Fingers 55d, die Neigung 85 des ausgewählten Fingers 75 zu bestimmen. Die Koordinaten der linken unteren Ecke 90 der ROI berechnen sich aus der ersten und der zweiten Position am Umfang des ersten Teilbereichs zwischen den Fingern 60c, 60d und dem Winkel $\alpha$ zu:

$$x = \vec{l}_{1,x} \cdot \cos\alpha + \vec{l}_{1,y} \cdot \sin\alpha$$

$$y = \vec{l}_{2,y} \cdot \cos\alpha - \vec{l}_{2,x} \cdot \sin\alpha$$

Die Breite w 95 kann dann als Betrag des Vektors w 95' gemäß

$$w = \left|\cos\alpha \cdot \left(\vec{l}_{1,x} - \vec{l}_{2,x}\right) + \sin\alpha \cdot \left(\vec{l}_{2,y} - \vec{l}_{1,y}\right)\right|$$

berechnet werden.

Die Höhe h 100 definiert sich ferner als Abstand zwischen der y-Koordinate der linken unteren Ecke 90 und der Fingerspitze 110. Zur Bestimmung der Fingerspitze 110 ist die Bildauswerteeinheit 20 ausgebildet, den Ausschnitt 80 des Standbilds oder des Binärbilds, der den ausgewählten Finger 75 aufweist, in Dickenrichtung, d.h. beispielsweise lateral bzw. ausgehend von der Fingerkuppe 110 in Richtung der Handfläche oder ausgehend von der Handfläche in Richtung der Fingerkuppe, in Abschnitte zu unterteilen, wobei ein erster Abschnitt, der ausschließlich Bildpunkte des zweiten Teilbereichs 65 aufweist, die Fingerkuppe 110 des ausgewählten Fingers 75 definiert. In anderen Worten kann die Region of Interest 80 zeilenweise von unten nach oben ausgehend vom Vektor w 95' parallel zu demselben durchlaufen werden, wobei die erste Pixelzeile, die nur noch aus Hintergrundpixeln besteht, die y-Position der Fingerspitze 110 definiert.

In anderen Worten kann die Bildauswerteeinheit ausgebildet eine Länge eines Fingers von einer Fingerkuppe zu einem Fußpunkt bestimmen. Hierzu kann die Bildauswerteeinheit den Fußpunkt eines ersten Fingers basierend auf einer an den ersten Finger angrenzenden ersten und einer an den ersten Finger angrenzenden zweiten Position zwischen den Fingern bestimmen. Der Fußpunkt eines zweiten Fingers kann ferner basierend auf einer einzigen an den ersten Finger angrenzenden Position zwischen den Fingern bestimmt werden. In nochmals anderen Worten kann somit, wie z.B. unten rechts in Fig. 2c gezeigt ist, der Endpunkt bzw. der Fußpunkt des Ringfingers (oder des Mittelfingers) basierend auf einen Mittelwert der y-Koordinaten der beiden angrenzenden Fingerzwischenräume ermittelt werden. Ferner kann der Endpunkt bzw. der Fußpunkt des Zeigefingers (oder des kleinen Fingers sowie des Daumens) anhand der x-Koordinate von einem an den Finger angrenzenden Zwischenraum bzw. senkrecht zur y-Achse durch den tiefsten Punkt des Zwischenraums ermittelt werden.

Somit ist die Bildauswerteeinheit 20 ausgebildet, den Ausschnitt 80 aus dem Standbild oder dem Binärbild auszuwählen, der durch die Fingerkuppe 110 des ausgewählten Fingers 75, die erste und die zweite Position 60c, 60d an dem Umfang des ersten Teilbereichs 45' zwischen den an den ausgewählten Finger angrenzenden Fingern, sowie der Position 55d des Fingers 75 bestimmt ist, wobei der Ausschnitt 80 den ausgewählten Finger 75 im Standbild 25 oder im Binärbild 40 isoliert.

Zur Bestimmung der Länge des ausgewählten Fingers werden im Folgenden zwei Ausführungsbeispiele beschrieben. Das bevorzugte Ausführungsbeispiel ist rechts unten in Fig. 2c gezeigt. Hier wird die Länge des ausgewählten Fingers 75 beispielhaft an einem Zeigefinger (linke Darstellung 205) und an einem Ringfinger (rechte Darstellung 210) gezeigt. In der linken Darstellung 205 wird die Länge des ausgewählten Fingers 75 als eine Länge einer, gemäß einer Längsausrichtung des ausgewählten Fingers, lotrecht in Verbindung zwischen der Fingerkuppe und einer senkrecht zu der lotrechten Verbindung angeordneten Linie durch eine Position 60c an einem Umfang des ersten Teilbereichs zwischen den Fingern durch die Bildauswerteeinheit 20 bestimmt. Die Längsausrichtung wird dabei vorteilhafterweise durch die Neigung 85 des ausgewählten Fingers 75 bestimmt.

Ferner kann die bestimmte Neigung des ausgewählten Fingers kompensiert werden, wobei die Länge des ausgewählten Fingers nach der Kompensation der Neigung lotrecht zu einer ermittelten Fingerkuppe berechnet werden kann. In anderen Worten kann die Länge eines Fingers entlang der ermittelten Neigung durch die Fingerkuppe bestimmt werden. Der Ausgangspunkt bzw. Fußpunkt an der Hand(innen)fläche kann gemäß den beschriebenen Ausführungsbeispielen erfolgen.

Die rechte Darstellung 210 zeigt eine alternative Bestimmung der Länge 115 des ausgewählten Fingers 75, wobei die Bildauswerteeinheit 20 ausgebildet ist, die Länge 115 des ausgewählten Fingers 75 als Distanz zwischen der Fingerkuppe 110 des ausgewählten Fingers und einem Mittelpunkt einer Verbindung 20 zwischen der ersten Position 60a an dem Umfang des ersten Teilbereichs zwischen den Fingern, die an den ausgewählten Finger angrenzt, und einer zweiten Position 60b an dem Umfang des ersten Teilbereichs, die an den ausgewählten Finger angrenzt, zu bestimmen.

Das alternative Ausführungsbeispiel zur Bestimmung der Länge des ausgewählten Fingers 75 ist oberhalb des bevorzugten Ausführungsbeispiels in Fig. 2c gezeigt. Gemäß diesem Ausführungsbeispiel ist die Bildauswerteeinheit 20 ausgebildet, aus dem Standbild 25 ein Graustufenbild 125 zu erzeugen. In Fig. 2c ist die ROI 80 des Graustufenbilds 125 anhand des Ringfingers 75 gezeigt. Die Bildauswerteeinheit 20 ist nun ausgebildet, von dem ausgewählten Finger 75 ein Helligkeitsprofil zu berechnen, wobei die Bildauswerteeinheit den ausgewählten Finger 75 in Dickenrichtung in Abschnitte unterteilt, wobei das Helligkeitsprofil 130 aus dem Mittelwert oder einer Summe der Abschnitte, d.h. aus dem Mittelwert oder einer Summe von Helligkeitswerten in den Abschnitten berechnet wird. Werden die ermittelten Werte jedes Abschnitts in einem Diagramm in gleicher Abfolge der Ermittlung aufgetragen, kann ein Diagramm erstellt werden, wie es oben rechts in Fig. 2c gezeigt ist. In anderen Worten kann die Bildauswerteeinheit 20 das Helligkeitsprofil aus einem Verlauf von Mittelwerten oder Summen (aus einer Vielzahl) von Abschnitten des ausgewählten Fingers bilden, wobei die Abschnitte lateral zu einer Ausdehnung des Fingers (bzw. des Abbild des Fingers) von der Fingerkuppe bis zur Handinnenfläche angeordnet sind. Somit kann für jeden Abschnitt eine Summe oder ein Mittelwert bestimmt werden, aus denen das Helligkeitsprofil gebildet wird.

Die Abschnitte sind beispielsweise Zeilen und Pixel der ROI 80, wobei die Zeilen auch auf einen mittleren Bereich 135 des ausgewählten Fingers 75 beschränkt werden können, um beispielsweise zu vermeiden, dass Hintergrundpixel an einer dünnen Stelle eines Fingers den ermittelten Wert eines Abschnitts beeinflussen bzw. verfälschen. Die Bildauswerteeinheit 20 ist nun ausgebildet, Falten im Bereich von Gelenken an dem ausgewählt Finger 75 anhand von lokalen Ausschlägen in dem Helligkeitsprofil 130 zu bestimmen und anhand der Position der Falten bzw. der Ausschläge die Länge 115 des ausgewählten Fingers 75 zu bestimmen. Neben dem Graustufenbild 125 ist der zugehörige Helligkeitsverlauf 130 gezeigt, in dem die Ausschläge 140a bis 140c deutlich erkennbar sind und wobei die Position des dritten Ausschlags 140c die Länge des ausgewählten Fingers ist.

Fig. 3 zeigt eine detailliertere Darstellung des in Fig. 2a gezeigten Segmentierungsalgorithmus. Ergänzend zur Aufnahme des Bildes 25 und der Anwendung des Color Structure Codes, der Bereiche mit ähnlichen Farbwerten zu einem Bereich zusammenfasst, wird anhand der Bereiche in Bild 30 ein Labelbild 32 erzeugt, bei dem die Farbwerte in Graustufen umgewandelt sind. Die Bereiche 33 der Hand 45 sind in Bild 34 nochmals in Graphendarstellung gezeigt. Ausgehend von einer Startregion können, beispielsweise per Breitensuche Brute Force-artig angrenzende Bereiche an den ausgewählten Bereich ausgewählt werden und auf Zugehörigkeit zu der Hand 45 getestet werden. Der Test, ob das so erhaltene Objekt eine Hand 45 ist, kann anhand dessen Kontur bestimmt werden. Dabei wird beispielsweise das bereits in Fig. 2b beschriebene Verfahren zur Konturbestimmung angewendet, wobei ein von Fig. 2b abweichender Startpunkt genutzt werden kann. Weist die Kontur 37 einen für die Hand 45 charakteristischen Verlauf auf, so weisen die zur Hand kombinierten Bereiche den ersten Teilbereich 45' des segmentierten Bildes 40 und die restlichen Bereiche den zweiten Teilbereich 65 des segmentierten Bildes 40 auf.

In anderen Worten unterteilt der Color Structure Code das Bild 25 in mehrere Regionen 33, ähnlich einem Mosaik. Die Regionen werden in allen möglichen Kombinationen ausgeblendet (vgl. Bild 35) und für die übrigen wird überprüft, ob sie die vollständige Form der Hand bilden (vgl. Kurvenverlauf 37), wobei ausgeblendete Regionen in einer Farbe (z.B. schwarz), und die verbliebenen Regionen einer anderen Farbe (z.B. weiß) dargestellt werden, um ein Binärbild 40 zu erhalten. Über den Verlauf der Kontur der potenziellen Hand kann überprüft werden, ob die Segmentierung das richtige Ergebnis geliefert hat. Der Konturverlauf wird dann dazu verwendet, die Fingerzwischenräume 60a-d und Fingerspitzen zu detektieren.

Ausführungsbeispiele zeigen die Aufnahmen von Händen, die mittels einfacher Kameras, wie sie beispielsweise in aktuellen Smartphones verbaut sind, erzeugt werden. Die Bilder werden dann von einem Rechnersystem, wie z.B. einem gewöhnlichen Computer oder unter Verwendung von Hardware, die für die Lösung des Problems optimiert ist, beispielsweise ein Graphikprozessor (GPU) oder einer anwendungsspezifischen inte-

grierten Schaltung (ASIC) ausgewertet, um die Fingerlängen zu bestimmen. Da die Aufnahmen vor einem beliebigen Hintergrund erzeugt werden sollen, sollten diese möglichst optimal segmentiert werden, um präzise und vergleichbare Messungen erzielen zu können. Hierfür ist die Anwendung des Color Structure Codes vorteilhaft, jedoch können beispielsweise auch andere Segmentierungsalgorithmen eingesetzt werden, die ein vergleichbares Ergebnis in kürzerer Zeit erhalten, als der hier genannte Brute Force-Ansatz.

Für die Messung der Fingerlängen sind bezüglich Fig. 2c zwei Verfahren vorgestellt worden:

1. Messung anhand der Geometrie, wobei die Fingerlänge unter Verwendung der Fingerspitze und Zwischenräume als Referenzpunkt gemessen wird.

2. Direkte Detektion der Falten in Anlehnung an die manuellen Messverfahren aus dem Stand der Technik, wobei von Zeige- und Ringfinger Helligkeitsprofile erstellt werden, aus denen dann die Länge sehr genau bestimmt werden kann.

Da diese Verfahren bei jeder Testperson nach dem gleichen Schema ablaufen, sind keine weiteren Nachmessungen erforderlich, wie es bei der manuellen Messung der Fall ist. Ferner können jedoch auch andere Verfahren zur Bestimmung der Fingerlänge angewendet werden. So ist es denkbar, bei der geometrischen Messung andere Referenzpunkte als die Fingerzwischenräume zu verwenden, um die Längen zu messen. Alternativ kann die Hand gewisse konstante und bekannte Proportionen aufweisen, die ebenfalls dazu verwendet werden können, um die Längen zu bestimmen. Ebenso ist es möglich, die eingesetzten Kantenfilter im Zuge der sich stetig optimierenden Bildverarbeitungsalgorithmen durch fortgeschrittene Kantenfilter zu ersetzen.

Die hier vorgestellten Ausführungsbeispiele ermöglichen eine deutliche Zeitersparnis für Tester und Probanden, da eine einmalige Messung anhand einer einzelnen Aufnahme der Handinnenfläche mit einer Kamera mit einer ausreichend guten Auflösung ausreicht, um die Fingerlängen zu bestimmen. Für die Detektion der Falten ist es vorteilhaft, wenn die Auflösung ausreicht, die Falten exakt bestimmen zu können. So können mehr Probanden in der gleichen Zeit untersucht werden, was repräsentativere Ergebnisse, beispielsweise in Studien, zur Korrelation zwischen Fingerlängen und psychischen Eigenschaften liefert.

Neben dem wissenschaftlichen Aspekt zur Untersuchung der Korrelation zwischen Zeige- und Ringfingerlängen und psychologischen Eigenschaften, kann die Erfindung auch im Bereich der Biometrie zur kontaktlosen Authentifizierung verwendet werden. Die Authentifizierung kann dann anhand der Form der Hand und/oder den Falten und Kapillaren geschehen.

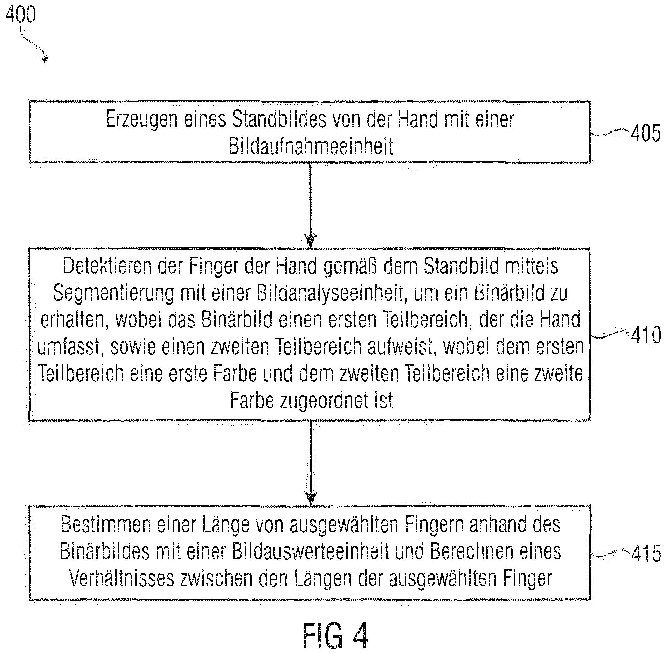

Fig. 4 zeigt ein Verfahren 400 zur kamerabasierten Berechnung eines Längenverhältnisses von ausgewählten Fingern anhand einer Hand. Das Verfahren umfasst einen Schritt 405 "Erzeugen eines Standbildes von der Hand mit einer Bildaufnahmeeinheit", einen Schritt 410 "Detektieren der Finger der Hand gemäß dem Standbild mittels Segmentierung mit einer Bildanalyseeinheit, um ein Binärbild zu erhalten, wobei das Binärbild einen ersten Teilbereich, der die Hand umfasst, sowie einen zweiten Teilbereich aufweist, wobei dem ersten Teilbereich eine erste Farbe und dem zweiten Teilbereich eine zweite Farbe zugeordnet ist", sowie einen Schritt 415 "Bestimmen einer Länge von ausgewählten Fingern anhand des Binärbildes mit einer Bildauswerteeinheit und Berechnen eines Verhältnisses zwischen den Längen der ausgewählten Finger" umfasst.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmier-baren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Quellen:**

[1] J. T. Manning, D. Scutt, J. Wilson, und D. I. Lewis-Jones. The ratio of 2nd to 4th digit length: a predictor of sperm numbers and concentrations of testosterone, luteinizing hormone and oestrogen, 13(11): 3000-3004, 1998.

[2] John T. Manning und Rogan P. Taylor. Second to fourth digit ratio and male ability in sport: implications for sexual selection in humans. Evolution and Human Behavior, 22:61-69, 2001

[3] J.C. Stevenson, P.M. Everson, D.C. Williams, G. Hipskind, M. Grimes, und E.R. Mahoney. Attention deficit/hyperactivity disorder (adhd) symptoms and digit ratios in a college sample. American Journal of Human Biology, 19:41-50, 2007.

[4] T.M. Mayhew, L. Gillam, R. McDonald, und F.J.P. Ebling. Human 2d (index) and 4d (ring) digit lengths; their variation and relationships during the menstrual cycle. Journal of Anatomy, 211:630-638, 2007.

[5] Ruggles George, Human finger types. The Anatomical Record, 46:199-204, July 1930.

[6] Richard A. Lippa. Are 2d:4d finger-length ratios related to sexual orientation? Yes for men, no for women. Journal of Personality and Social Psychology, 85(1):179-188, 2003.

[7] Johannes Kornhuber, Gabriele Erhard, Bernd Lenz, Thomas Kraus, Wolfgng Sperling, Kristina Bayerlein, Teresa Biermann, und Christina Stoessel. Low digit ratio 2d:4d in alcohol dependent patients. PLoS ONE, 6, 2011.

[8] Johannes Kornhuber, Eva-Maria Zenses, Bernd Lenz, Christina Stoessel, Polyxeni Bouna-Pyrrou, Florian Rehbein, Sören Kliem, und Thomas Mößle. Low 2d:4d values are associated with video game addiction. PLoS ONE, 8, 2013.

[9] Lutz Priese und Patrick Sturm. Introduction to the color structure code and its implementation. 2003. URL [Stand: 25.04.2014]: https://www.uni-koblenz-landau.de/koblenz/fb4/icv/agpriese/research/Color\mgSeg/download/csc.pdf.

**Patentansprüche**

1. Vorrichtung (5) zum kamerabasierten Berechnen eines Längenverhältnisses von Fingern einer Hand (45) mit:

einer Bildaufnahmeeinheit (10), die ausgebildet ist, ein Standbild (25) von der Hand (45) zu erzeugen;
einer Bildanalyseeinheit (15), die ausgebildet ist, die Finger der Hand (45) gemäß dem Standbild (25) mittels Segmentierung zu detektieren, um ein Binärbild (40) zu erhalten, wobei das Binärbild (40) einen ersten Teilbereich (45'), der die Hand (45) umfasst, sowie einen zweiten Teilbereich (65) aufweist, wobei dem ersten Teilbereich eine erste Farbe und dem zweiten Teilbereich (65) eine zweite Farbe zugeordnet ist;
einer Bildauswerteeinheit (20), die ausgebildet ist, eine Länge von ausgewählten Fingern (75) anhand des Binärbildes (40) zu bestimmen und ein Verhältnis zwischen den Längen (115) der ausgewählten Finger (75) zu berechnen, **dadurch gekennzeichnet, dass** die Bildanalyseeinheit (15) ausgebildet ist, eine Position (55a-d) der Finger und eine Position (60a-d) an einem Umfang des ersten Teilbereichs (45) zwischen den Fingern in dem Binärbild (40) zu bestimmen, wobei die Bildanalyseeinheit (15) ausgebildet ist, ausgehend von einem Fixpunkt (50) im ersten Teilbereich (45') zirkular eine Entfernung von dem Fixpunkt zu einem nächstgelegenen Punkt im zweiten Teilbereich (65) unter sich unterscheidenden Winkeln zu ermitteln, wobei lokale Maxima in einem Verlauf (70) der Entfernung über die Winkel die Position (55a-d) der Finger und lokale Minima zwischen den Maxima die Position (60a-d) an dem Umfang des ersten Teilbereichs (45') zwischen den Fingern (75) bestimmen, und wobei die Bildauswerteeinheit (20) ausgebildet ist, einen Ausschnitt aus dem Standbild oder dem Binärbild (25, 40) auszuwählen, der durch eine Fingerkuppe (110) eines ausgewählten Fingers (75), eine erste und eine zweite Position (60c,d) an einem Umfang des ersten Teilbereichs (45') zwischen den an den ausgewählten Finger (75) angrenzenden Fingern, sowie die Position (55d) des ausgewählten Fingers bestimmt ist, wobei der Ausschnitt (80) den ausgewählten Finger (75) im Standbild (25) oder im Binärbild (40) isoliert.

2. Vorrichtung (5) gemäß Anspruch 1, wobei der Fixpunkt (50) ein Schwerpunkt des ersten Teilbereichs (45') ist.

3. Vorrichtung (5) gemäß einem der Ansprüche 1 oder 2, wobei die Bildanalyseeinheit (15) ausgebildet ist, in den Fixpunkt (50) Halbgeraden in Schritten von 1 Grad zu legen.

4. Vorrichtung gemäß einem der vorherigen Ansprüche, wobei die Bildauswerteeinheit (20) ausgebildet ist, anhand der zweiten Position (60d) an dem Umfang des ersten Teilbereichs (45'), sowie der Position (55d) des ausgewählten Fingers (75) eine Neigung (85) des ausgewählten Fingers zu bestimmen.

5. Vorrichtung gemäß einem der vorherigen Ansprüche, wobei die Bildauswerteeinheit ausgebildet ist, eine Neigung eines ausgewählten Fingers zu bestimmen und zu kompensieren und die Länge des ausgewählten Fingers nach der Kompensation der Neigung als eine Länge einer, gemäß einer Längsausrichtung des ausgewählten Fingers (75), Verbindung zwischen der Fingerkuppe (115) und einer senkrecht zu der Verbindung angeordneten Linie zu berechnen.

6. Vorrichtung (5) gemäß einem der vorherigen Ansprüche, wobei die Bildauswerteeinheit (20), ausgebildet ist, die Länge (115) eines ausgewählten Fingers (75) als Distanz zwischen einer Fingerkuppe (110) des ausgewählten Fingers (75) und einen Mittelpunkt einer Verbindung (120) zwischen einer ersten Position (60a) an einem Umfang des ersten Teilbereichs (45') zwischen den Fingern, die an den ausgewählten Finger (75) angrenzt, und einer zweiten Position (60b) an einem Umfang des ersten Teilbereichs (45'), die an den ausgewählten Finger (75) angrenzt, zu bestimmen, und/oder wobei die Bildauswerteeinheit ausgebildet ist, die Länge (115) des ausgewählten Fingers (75), als eine Länge einer, gemäß einer Längsausrichtung des ausgewählten Fingers (75), lotrechten Verbindung zwischen der Fingerkuppe (115) und einer senkrecht zu der lotrechten Verbindung angeordneten Linie durch eine Position an einem Umfang des ersten Teilbereichs (45') zwischen den Fingern zu bestimmen.

7. Vorrichtung (5) gemäß einem der vorherigen Ansprüche, wobei die Bildauswerteeinheit ausgebildet ist, eine Länge eines Fingers von einer Fingerkuppe zu einem Fußpunkt zu bestimmen;

wobei die Bildauswerteeinheit ausgebildet ist, den Fußpunkt eines ersten Fingers basierend auf einer an den ersten Finger angrenzenden ersten und einer an den ersten Finger angrenzenden zweiten Position zwischen den Fingern zu bestimmen und den Fußpunkt eines zweiten Fingers basierend auf einer einzigen an den ersten Finger angrenzenden Position zwischen den Fingern zu bestimmen.

8. Vorrichtung (5) gemäß einem der vorherigen Ansprüche, wobei die Bildauswerteeinheit (20) ausgebildet ist, einen Ausschnitt (80) des Standbildes (25) oder des Binärbildes (40), der den ausgewählten Finger (75) aufweist, in Dickenrichtung in Abschnitte zu unterteilen, wobei ein erster Abschnitt, der ausschließlich Bildpunkte des zweiten Teilbereichs (65) aufweist, eine Fingerkuppe (115) des ausgewählten Fingers definiert.

9. Vorrichtung (5) gemäß einem der vorherigen Ansprüche, wobei die Bildauswerteeinheit (20) ausgebildet ist, aus dem Standbild (25) ein Graustufenbild (125) zu erzeugen.

10. Vorrichtung (5) gemäß einem der vorherigen Ansprüche, wobei die Bildauswerteeinheit (20) ausgebildet ist, von einem ausgewählten Finger (75) ein Helligkeitsprofil (130) zu berechnen.

11. Vorrichtung (5) gemäß Anspruch 10 wobei Bildauswerteeinheit (20) ausgebildet ist, den ausgewählten Finger (75) in Dickenrichtung in Abschnitte zu unterteilen, wobei das Helligkeitsprofil aus einem Mittelwert oder einer Summe der Abschnitte berechnet wird.

12. Vorrichtung (5) gemäß Anspruch 10, wobei die Bildauswerteeinheit (20) ausgebildet ist, das Helligkeitsprofil aus einem Verlauf von Mittelwerten oder Summen von Abschnitten des ausgewählten Fingers zu bilden, wobei die Abschnitte lateral zu einer Ausdehnung des Fingers von der Fingerkuppe bis zur Handinnenfläche angeordnet sind.

13. Vorrichtung (5) gemäß einem der Ansprüche 10 bis 12, wobei die Bildauswerteeinheit (20) ausgebildet ist, Falten im Bereich von Gelenken an einem ausgewählten Finger (75) anhand von lokalen Ausschlägen in dem Helligkeitsprofil (130) zu bestimmen und, anhand der Position der Falten die Länge (115) des ausgewählten Fingers (75) zu bestimmen.

14. Vorrichtung (5) gemäß einem der vorherigen Ansprüche, wobei die Bildanalyseeinheit (15) ausgebildet ist, das Standbild (25) mittels eines Farbstruktur Codes (Color Structure Code) zu segmentieren.

15. Verfahren (400) zur kamerabasierten Berechnung eines Längenverhältnisses von ausgewählten Fingern an einer Hand, das Verfahren umfasst:

Erzeugen eines Standbildes von Hand mit einer Bildaufnahmeeinheit;

Detektieren der Finger der Hand gemäß dem Standbild mittels Segmentierung mit einer Bildanalyseeinheit, um ein Binärbild zu erhalten, wobei das Binärbild einen ersten Teilbereich, der die Hand umfasst, sowie einen zweiten Teilbereich aufweist, wobei dem ersten Teilbereich eine erste Farbe und dem zweiten Teilbereich eine zweite Farbe zugeordnet ist;

Bestimmen einer Länge von ausgewählten Fingern anhand des Binärbildes mit einer Bildauswerteeinheit und Berechnen eines Verhältnisses zwischen den Längen der ausgewählten Finger,

**dadurch gekennzeichnet, dass** das Verfahren ein Bestimmen einer Position (55a-d) der Finger und einer Position (60a-d) an einem Umfang des ersten Teilbereichs (45) zwischen den Fingern in dem Binärbild (40) aufweist, wobei, ausgehend von einem Fixpunkt (50) im ersten Teilbereich (45') zirkular eine Entfernung von dem Fixpunkt zu einem nächstgelegenen Punkt im zweiten Teilbereich (65) unter sich unterscheidenden Winkeln ermittelt wird, wobei lokale Maxima in einem Verlauf (70) der Entfernung über die Winkel die Position (55a-d) der Finger und lokale Minima zwischen den Maxima die Position (60a-d) an dem Umfang des ersten Teilbereichs (45') zwischen den Fingern (75) bestimmen, und wobei das Verfahren ein Auswählen eines Ausschnitt aus dem Standbild oder dem Binärbild (25, 40) aufweist, der durch eine Fingerkuppe (110) eines ausgewählten Fingers (75), eine erste und eine zweite Position (60c,d) an einem Umfang des ersten Teilbereichs (45') zwischen den an den ausgewählten Finger (75) angrenzenden Fingern, sowie die Position (55d) des ausgewählten Fingers bestimmt ist, wobei der Ausschnitt (80) den ausgewählten Finger (75) im Standbild (25) oder im Binärbild (40) isoliert.

16. Computerprogramm mit einem Programmcode zur Durchführung des Verfahrens nach Anspruch 15, wenn das Programm auf einem Computer abläuft.

**Claims**

1. Apparatus (5) for camera-based calculation of a length ratio of fingers of a hand (45), comprising:

an image capturing unit (10) configured to generate a still image (25) of the hand (45);

an image analysis unit (15) configured to detect the fingers of the hand (45) according to the still image (25) by means of segmentation to obtain a binary image (40), wherein the binary image (40) comprises a first partial area (45') including the hand (45) as well as a second partial area (65), wherein a first color is associated to the first partial area and a second color is associated to the second partial area (65);

an image evaluation unit (20) configured to determine a length of selected fingers (75) based on the binary image (40) and to calculate a ratio between the lengths (115) of the selected fingers (75),

**characterized in that** the image analysis unit (15) is configured to determine a position (55a-d) of the fingers and a position (60a-d) at a circumference of the first partial area (45) between the fingers in the binary image (40), wherein the image analysis unit (15) is configured to circularly determine, starting from a fixed point (50) in the first partial area (45'), a distance from the fixed point to a closest point in the second partial area (65) at differing angles, wherein local maxima in a course (70) of the distance across the angles determine the position (55a-d) of the fingers and local minima between the maxima determine the position (60a-d) at the circumference of the first partial area (45') between the fingers (75) and

wherein the image evaluation unit (20) is configured to select a section of the still image or the binary image (25, 40) that is determined by a finger tip (110) of a selected finger (75), first and second positions (60c, d) at a circumference of the first partial area (45') between the fingers adjacent to the selected finger (75), as well as the position (55d) of the selected finger, wherein the section (80) isolates the selected finger (75) in the still image (25) or in the binary image (40).

2.  Apparatus (5) according to claim 1, wherein the fixed point (50) is a centroid of the first partial area (45').

3.  Apparatus (5) according to one of claims 1 or 2, wherein the image analysis unit (15) is configured to place half-lines in steps of 1 degree into the fixed point (50).

4.  Apparatus according to one of the preceding claims, wherein the image evaluation unit (20) is configured to determine, based on the second position (60) at the circumference of the first partial area (45') as well as the position (55d) of the selected fingers (75), an inclination (85) of the selected finger.

5.  Apparatus according to one of the preceding claims, wherein the image evaluation unit is configured to determine and to compensate an inclination of a selected finger and to calculate the length of the selected finger after the compensation of the inclination as a length of a connection between the fingertip (150) and a line arranged perpendicular to the connection, according to a longitudinal orientation of the selected finger (75).

6.  Apparatus (5) according to one of the preceding claims,
    wherein the image evaluation unit (20) is configured to determine the length (115) of a selected finger (75) as a distance between a fingertip (110) of the selected finger (75) and a center of a connection (120) between a first position (60a) at a circumference of the first partial area (45') between the fingers adjacent to the selected finger (75) and a second position (60b) at a circumference of the first partial area (45') adjacent to the selected finger (75) and/or wherein the image evaluation unit is configured to determine the length (115) of the selected finger (75) as a length of a normal connection between the fingertip (115) and a line arranged perpendicular to the normal connection, according to a longitudinal orientation of the selected finger (75), by a position at a circumference of the first partial area (45') between the fingers.

7.  Apparatus (5) according to one of the preceding claims,
    wherein the image evaluation unit is configured to determine a length of a finger from a fingertip to a base point;
    wherein the image evaluation unit is configured to determine the base point of a first finger based on a first position adjacent to the first finger and a second position adjacent to the first finger between the fingers and to determine the base point of a second finger based on a single position adjacent to the first finger between the fingers.

8.  Apparatus (5) according to one of the preceding claims, wherein the image evaluation unit (20) is configured to partition a section (80) of the still image (25) or the binary image (40) comprising the selected finger (75) into portions in the thickness direction, wherein a first portion comprising exclusively image points of the second partial area (65) defines a fingertip (115) of the selected finger.

9.  Apparatus (5) according to one of the preceding claims, wherein the image evaluation unit (20) is configured to generate a grey scale image (125) from the still image (25).

10. Apparatus (5) according to one of the preceding claims, wherein the image evaluation unit (20) is configured to calculate a brightness profile (130) from a selected finger (75).

11. Apparatus (5) according to claim 10, wherein the image evaluation unit (20) is configured to partition the selected finger (75) into portions in the thickness direction, wherein the brightness profile is calculated from an average value or a sum of the portions.

12. Apparatus (5) according to claim 10, wherein the image evaluation unit (20) is configured to form the brightness profile from a course of average values or sums of portions of the selected finger, wherein the portions are arranged laterally to an extension of the finger from the fingertip to the palm of the hand.

13. Apparatus (5) according to one of claims 10 to 12, wherein the image evaluation unit (20) is configured to determine wrinkles in the area of joints at a selected finger (75) based on local deflections in the brightness profile (130) and to determine the length (115) of the selected finger (75) based on the position of the wrinkles.

14. Apparatus (5) according to one of the preceding claims, wherein the image analysis unit (15) is configured to segment the still image (25) by means of a color structure code.

15. Method (400) for camera-based calculation of a length ratio of selected fingers of a hand, the method including:

generating a still image of a hand with an image capturing unit;
detecting the fingers of the hand according to the still image by means of segmentation with an image analysis unit to obtain a binary image, wherein the binary image comprises a first partial area including the hand as well as a second partial area, wherein a first color is associated to the first partial area and a second color is associated to the second partial area;
determining a length of selected fingers based on the binary image with an image evaluation unit and calculating a ratio between the lengths of the selected fingers,
**characterized in that** the method comprises determining a position (55a-d) of the fingers and a position (60a-d) at a circumference of the first partial area (45) between the fingers in the binary image (40), wherein, starting from a fixed point (50) in the first partial area (45'), a distance from the fixed point to a closest point in the second partial area (65) is circularly determined at differing angles, wherein local maxima in a course (70) of the distance across the angles determine the position (55a-d) of the fingers and local minima between the maxima determine the position (60a-d) at the circumference of the first partial area (45') between the fingers (75) and wherein the method comprises selecting a section from the still image or the binary image (25, 40) determined by a fingertip (110) of a selected finger (75), first and second positions (60c, d) at a circumference of the first partial area (45') between the fingers adjacent to the selected finger (75), as well as the position (55d) of the selected finger, wherein the section (80) isolates the selected finger (75) in the still image (25) or in the binary image (40).

16. Computer program having a program code for performing the method according to claim 15 when the program runs on a computer.

**Revendications**

1. Dispositif (5) de calcul, à base d'une caméra, d'un rapport de longueur des doigts d'une main (45), avec:

une unité de capture d'image (10) qui est conçue pour générer une image fixe (25) de la main (45);
une unité d'analyse d'image (15) qui est conçue pour détecter les doigts de la main (45) selon l'image fixe (25) au moyen d'une segmentation pour obtenir une image binaire (40), où l'image binaire (40) comporte une première zone partielle (45') qui comporte la main (45) ainsi qu'une deuxième zone partielle (65), où à la première zone partielle est associée une première couleur et à la deuxième zone partielle (65) est associée une deuxième couleur;
une unité d'évaluation d'image (20) qui est conçue pour déterminer une longueur de doigts sélectionnés (75) sur base de l'image binaire (40) et pour calculer un rapport entre les longueurs (115) des doigts sélectionnés (75),
**caractérisé par le fait que** l'unité d'analyse d'image (15) est conçue pour déterminer une position (55a à d) des doigts et une position (60a à d) à la périphérie de la première zone partielle (45) entre les doigts dans l'image binaire (40), où l'unité d'analyse d'image (15) est conçue pour déterminer, en partant d'un point fixe (50) dans la première zone partielle (45'), de manière circulaire une distance entre le point fixe et un point le plus rapproché dans la deuxième zone partielle (65) selon des angles différant l'un de l'autre, où les maximums locaux dans une évolution de la distance (70) sur les angles déterminent la position (55a à d) des doigts et les minimums locaux entre les maximums déterminent la position (60a à d) à la périphérie de la première zone partielle (45') entre les doigts (75), et dans lequel l'unité d'évaluation d'image (20) est conçue pour sélectionner un segment de l'image fixe ou de l'image binaire (25, 40) qui est déterminé par le bout de doigt (110) d'un doigt sélectionné (75), une première et une deuxième position (60c, d) à la périphérie de la première zone partielle (45') entre les doigts adjacents au doigt sélectionné (75) ainsi que la position (55d) du doigt sélectionné, où le segment (80) isole le doigt sélectionné (75) dans l'image fixe (25) ou dans l'image binaire (40).

2. Dispositif (5) selon la revendication 1, dans lequel le point fixe (50) est un centre de gravité de la première zone partielle (45').

3. Dispositif (5) selon l'une des revendications 1 ou 2, dans lequel l'unité d'analyse d'image (15) est conçue pour placer au point fixe (50) des lignes semi-droites en incréments de 1 degré.

4. Dispositif selon l'une des revendications précédentes, dans lequel l'unité d'évaluation d'image (20) est conçue pour déterminer, sur base de la deuxième position (60d) à la périphérie de la première zone partielle (45') ainsi que de la position (55d) du doigt sélectionné (75), une inclinaison (85) du doigt sélectionné.

5. Dispositif selon l'une des revendications précédentes, dans lequel l'unité d'évaluation d'image est conçue pour déterminer et compenser une inclinaison d'un doigt sélectionné et pour calculer la longueur du doigt sélectionné, après compensation de l'inclinaison, comme longueur d'une connexion, selon une orientation longitudinale du doigt sélectionné (75), entre le bout de doigt (115) et une ligne disposée perpendiculairement à la connexion.

6. Dispositif (5) selon l'une des revendications précédentes,
l'unité d'évaluation d'image (20) est conçue pour déterminer la longueur (115) d'un doigt sélectionné (75) comme distance entre le bout de doigt (110) du doigt sélectionné (75) et un point central d'une connexion (120) entre une première position (60a) à la périphérie de la première zone partielle (45') entre les doigts qui sont adjacents au doigt sélectionné (75) et une deuxième position (60b) à la périphérie de la première zone partielle (45') qui est adjacente au doigt sélectionné (75), et/ou
dans lequel l'unité d'évaluation d'image est conçue pour déterminer la longueur (115) du doigt sélectionné (75) comme longueur d'une connexion verticale, selon une orientation longitudinale du doigt sélectionné (75), entre le bout de doigt (115) et une ligne disposée perpendiculairement à la connexion verticale passant par une position à la périphérie de la première zone partielle (45') entre les doigts.

7. Dispositif (5) selon l'une des revendications précédentes,
dans lequel l'unité d'évaluation d'image est conçue pour déterminer une longueur d'un doigt entre un bout de doigt et un point de base;
dans lequel l'unité d'évaluation d'image est conçue pour déterminer le point de base d'un premier doigt sur base d'une première position adjacente au premier doigt et d'une deuxième position adjacente au premier doigt entre les doigts et pour déterminer le point de base d'un deuxième doigt sur base d'une seule position adjacente au premier doigt entre les doigts.

8. Dispositif (5) selon l'une des revendications précédentes, dans lequel l'unité d'évaluation d'image (20) est conçue pour subdiviser un segment (80) de l'image fixe (25) ou de l'image binaire (40) qui présente le doigt sélectionné (75) dans le sens de l'épaisseur en segments, dans lequel un premier segment qui présente exclusivement des pixels de la deuxième zone partielle (65) définit le bout de doigt (115) du doigt sélectionné.

9. Dispositif (5) selon l'une des revendications précédentes, dans lequel l'unité d'évaluation d'image (20) est conçue pour générer, à partir de l'image fixe (25), une image de niveaux de gris (125).

10. Dispositif (5) selon l'une des revendications précédentes, dans lequel l'unité d'évaluation d'image (20) est conçue pour calculer un profil de luminosité (130) d'un doigt sélectionné (75).

11. Dispositif (5) selon la revendication 10, dans lequel l'unité d'évaluation d'image (20) est conçue pour diviser le doigt sélectionné (75) dans le sens de l'épaisseur en segments, dans lequel le profil de luminosité est calculé à partir d'une moyenne ou d'une somme des segments.

12. Dispositif (5) selon la revendication 10, dans lequel l'unité d'évaluation d'image (20) est conçue pour former le profil de luminosité à partir d'une évolution des valeurs moyennes ou des sommes des segments du doigt sélectionné, dans lequel les segments sont disposés de manière latérale par rapport à une extension du doigt du bout de doigt jusqu'aux paumes.

13. Dispositif (5) selon l'une des revendications 10 à 12, dans lequel l'unité d'évaluation d'image (20) est conçue pour déterminer des plis à l'endroit des articulations sur un doigt sélectionné (75) sur base d'éruptions locales dans le profil de luminosité (130) et pour déterminer, sur base de la position des plis, la longueur (115) du doigt sélectionné (75).

**14.** Dispositif (5) selon l'une des revendications précédentes, dans lequel l'unité d'analyse d'image (15) est conçue pour segmenter l'image fixe (25) au moyen d'un Code de Structure de Couleur (Color Structure Code).

**15.** Procédé (400) de calcul, à base d'une caméra, d'un rapport de longueur de doigts sélectionnés d'une main, le procédé comportant le fait de:

générer une image fixe de la main par une unité de capture d'image;
détecter les doigts de la main selon l'image fixe par segmentation par une unité d'analyse d'image pour obtenir une image binaire, où l'image binaire présente une première zone partielle qui comporte la main ainsi qu'une deuxième zone partielle, où à la première zone partielle est associée une première couleur et à la deuxième zone partielle est associée une deuxième couleur;
déterminer une longueur des doigts sélectionnés sur base de l'image binaire par une unité d'évaluation d'image et calculer un rapport entre les longueurs des doigts sélectionnés,
**caractérisé par le fait que** le procédé présente le fait de déterminer une position (55a à d) des doigts et une position (60a à d) sur une périphérie de la première zone partielle (45) entre les doigts dans l'image binaire (40), dans lequel est déterminée, en partant d'un point fixe (50) dans la première zone partielle (45'), de manière circulaire une distance entre le point fixe et un point le plus rapproché dans la deuxième zone partielle (65) selon des angles différant l'un de l'autre, où les maximums locaux dans une évolution de la distance (70) sur les angles déterminent la position (55a à d) des doigts et les minimums locaux entre les maximums déterminent la position (60a à d) à la périphérie de la première zone partielle (45') entre les doigts (75), et
dans lequel le procédé présente la sélection d'un segment de l'image fixe ou de l'image binaire (25, 40) qui est déterminé par le bout de doigt (110) d'un doigt sélectionné (75), une première et une deuxième position (60c, d) sur une périphérie de la première zone partielle (45') entre les doigts adjacents au doigt sélectionné (75) ainsi que la position (55d) du doigt sélectionné, dans lequel le segment (80) isole le doigt sélectionné (75) dans l'image fixe (25) ou dans l'image binaire (40).

**16.** Programme d'ordinateur avec un code de programme pour réaliser le procédé selon la revendication 15 lorsque le programme est exécuté sur un ordinateur.

EP 3 259 736 B1

5

| Bildaufnahmeeinheit | Bildanalyseeinheit | Bildauswerteeinheit |

10          15          20

FIG 1

EP 3 259 736 B1

## Segmentierung

Eingabe

Color Structure
Code

Brute Force

Segmentiertes
Bild

45

45

45'

25

30

35

40

# FIG 2A

FIG 2B

FIG 2C

EP 3 259 736 B1

FIG 3

EP 3 259 736 B1

400

Erzeugen eines Standbildes von der Hand mit einer Bildaufnahmeeinheit    405

Detektieren der Finger der Hand gemäß dem Standbild mittels Segmentierung mit einer Bildanalyseeinheit, um ein Binärbild zu erhalten, wobei das Binärbild einen ersten Teilbereich, der die Hand umfasst, sowie einen zweiten Teilbereich aufweist, wobei dem ersten Teilbereich eine erste Farbe und dem zweiten Teilbereich eine zweite Farbe zugeordnet ist    410

Bestimmen einer Länge von ausgewählten Fingern anhand des Binärbildes mit einer Bildauswerteeinheit und Berechnen eines Verhältnisses zwischen den Längen der ausgewählten Finger    415

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015017099 A1
- US 20110268365 A1
- US 20120068917 A1
- EP 22797030 A2

**In der Beschreibung aufgeführte Nicht-Patentliteratur**

- **J. T. MANNING ; D. SCUTT ; J. WILSON ; D. I. LEWIS-JONES.** The ratio of 2nd to 4th digit length: a predictor of sperm numbers and concentrations of testosterone. *luteinizing hormone and oestrogen,* 1998, vol. 13 (11), 3000-3004
- **JOHN T. MANNING ; ROGAN P. TAYLOR.** Second to fourth digit ratio and male ability in sport: implications for sexual selection in humans. *Evolution and Human Behavior,* 2001, vol. 22, 61-69
- **J.C. STEVENSON ; P.M. EVERSON ; D.C. WILLIAMS ; G. HIPSKIND ; M. GRIMES ; E.R. MAHONEY.** Attention deficit/hyperactivity disorder (adhd) symptoms and digit ratios in a college sample. *American Journal of Human Biology,* 2007, vol. 19, 41-50
- **T.M. MAYHEW ; L. GILLAM ; R. MCDONALD ; F.J.P. EBLING.** Human 2d (index) and 4d (ring) digit lengths; their variation and relationships during the menstrual cycle. *Journal of Anatomy,* 2007, vol. 211, 630-638
- **RUGGLES GEORGE.** Human finger types. *The Anatomical Record,* Juli 1930, vol. 46, 199-204
- **RICHARD A. LIPPA.** Are 2d:4d finger-length ratios related to sexual orientation? Yes for men, no for women. *Journal of Personality and Social Psychology,* 2003, vol. 85 (1), 179-188
- **JOHANNES KORNHUBER ; GABRIELE ERHARD ; BERND LENZ ; THOMAS KRAUS ; WOLFGNG SPERLING ; KRISTINA BAYERLEIN ; TERESA BIERMANN ; CHRISTINA STOESSEL.** Low digit ratio 2d:4d in alcohol dependent patients. *PLoS ONE,* 2011, vol. 6
- **JOHANNES KORNHUBER ; EVA-MARIA ZENSES ; BERND LENZ ; CHRISTINA STOESSEL ; BOUNA-PYRROU ; FLORIAN REHBEIN ; SÖREN KLIEM ; THOMAS MÖßLE.** Low 2d:4d values are associated with video game addiction. *PLoS ONE,* 2013, vol. 8
- **LUTZ PRIESE ; PATRICK STURM.** *Introduction to the color structure code and its implementation,* 2003, https://www.uni-koblenz-landau.de/koblenz/fb4/icv/agpriese/research/Color\mg-Seg/download/csc.pdf.